# EUROPÄISCHE PATENTANMELDUNG

(11) **EP 1 167 102 A1**
(43) Veröffentlichungstag der Anmeldung: **02.01.2002**
(21) Anmeldenummer: 01105873.2
(22) Anmeldetag: 09.03.2001
(51) Int. Cl.: B60J 10/00

(54) **Fahrzeugdichtung**

(30) Priorität: 21.06.2000 DE 10030543
(71) Anmelder: Meyer, Dieter, 31542 Bad Nenndorf (DE); Braun, Hans-Peter, 31535 Neustadt (DE)
(72) Erfinder: Meyer, Dieter, 31542 Bad Nenndorf (DE); Braun, Hans-Peter, 31535 Neustadt (DE)
(74) Vertreter: Patentanwälte Thömen & Körner

(57) **Zusammenfassung**

Es wird eine Fahrzeugdichtung beschrieben, welche in einem Spalt zwischen der Karosserie und einem Anbauteil oder zwischen Anbauteilen untereinander angeordnet ist.

Die Fahrzeugdichtung besteht aus einem Strang (14) mit elastischen Eigenschaften. Der Strang (14) umfasst wenigstens eine Luftkammer (18), die an eine externe Druckquelle (20) anschließbar ist. Die elastischen Eigenschaften des Stranges (14) sind durch Ändern des Druckes änderbar.

Da die elastischen Eigenschaften nur noch unwesentlich durch die Materialeigenschaften beeinflußt werden, können als Werkstoffe auch TP, TPE und TPV eingesetzt werden.

## Beschreibung

Die Erfindung betrifft eine Fahrzeugdichtung nach dem Oberbegriff des Anspruchs 1.

Bei Fahrzeugen werden Dichtungen zwischen der Karosserie und Anbauteilen, wie Türen oder Klappen, oder zwischen Anbauteilen untereinander, wie Türen und Fensterscheiben, sowie Dichtungen zwischen Hardtop, Softtop und sogenannten rahmenlosen Scheibenführungen eingesetzt. Die Dichtungen sollen eine direkte Berührung der Teile vermeiden, im Fahrbetrieb Vibrationen dämpfen und den Eintritt von Luft, Feuchtigkeit, Staub und Schmutz durch den Spalt zwischen der Karosserie und dem Anbauteil oder zwischen den Anbauteilen untereinander vermeiden.

Bei der Weiterentwicklung von Fahrzeugen besteht allgemein die Forderung nach Kostenreduzierung und Energieeinsparung bei gleichzeitiger Fahrkomfortsteigerung und maximaler Gewichtsreduzierung. Eine Möglichkeit der Energieeinsparung besteht in einer Gewichtsreduktion, um die Walgverluste in den Reifen zu verringern und eine kleinere Masse bei Steigungen mitzuführen oder beschleunigen zu müssen.

Beim üblichen Schließen von Anbauteilen wie Türen oder Klappen wird deren Massenträgheit ausgenutzt, um sie nach Anstoßen ihrer Schließbewegung selbständig ins Schloss fallen zu lassen. Wird ihre Masse verringert, kann bei der gewohnten Schließbewegung der Bewegungsimpuls nicht mehr ausreichen, um die Gegenkraft der elastischen Fahrzeugdichtung zu überwinden.

Um diesen Nachteil auszugleichen, könnte die Klappe oder Tür mit mehr Schwung zugeworfen werden. Dies wäre aber mit mehr Lärm verbunden, was auch unerwünscht ist. Eine weitere Möglichkeit besteht darin, Zuziehhilfen im Fahrzeug einzubauen, die die Tür oder Klappe in die Endstellung ziehen. Eine Zuziehhilfe besteht u. a. aus einem elektrisch betriebenen Motor und mechanischen Teilen. Je höher der Widerstand der Dichtung, desto kräftiger und mechanisch stabiler muss das System ausgestattet sein. Diese verteuern aber das Fahrzeug erheblich und steigern darüber hinaus das Gewicht. Schließlich könnte man Dichtungen verwenden, die weniger Widerstand aufweisen und sich daher leichter verformen lassen. Hier besteht aber die Gefahr, dass die Dichtungen dann zu schwach für den Einsatz im Fahrbetrieb sind und ihre Funktion als Dichtung und Schalldämmung nicht ausreichend erfüllen können.

Der Erfindung liegt die Aufgabe zugrunde, eine Fahrzeugdichtung dahingehend zu verbessern, dass sie bei Stillstand das Schließen von Anbauteilen weniger beeinträchtigt, aber im Fahrbetrieb eine hohe Dichtwirkung und Geräuschdämmung entwickelt.

Diese Aufgabe wird bei einer Fahrzeugdichtung nach dem Oberbegriff des Anspruchs 1 durch die Merkmale dieses Anspruchs gelöst.

Weiterbildungen und vorteilhafte Ausgestaltungen der Erfindung ergeben sich aus den Unteransprüchen.

Die zur Lösung führende Überlegung besteht darin, die elastischen Eigenschaften der Dichtung den jeweiligen Anforderungen anzupassen, die an die Dichtung gestellt werden. Beim Öffnen und Schließen eines Anbauteils soll die Dichtung möglichst wenig Kraft ausüben, damit die Handhabung erleichtert wird.

So soll beim Schließen von Türen oder Klappen dies mit wenig Schwung eingeleitet werden können. Hingegen soll im Fahrbetrieb eine hohe Dichtwirkung und Dämpfung vorhanden sein, damit Schwingungen zwischen den Anbauteilen untereinander oder den Anbauteilen und der Karosserie sicher verhindert werden und auch der Spalt zwischen den Anbauteilen untereinander oder den Anbauteilen und der Karosserie gegen Eindringen von Luft, Feuchtigkeit, Staub oder Schmutz zuverlässig abgedichtet wird. Dies wird dadurch erreicht, dass die Dichtung im Grundsatz schwächer als eine konventionelle Dichtung ausgeführt ist, sie aber durch komprimierte Luft in ihrer Eigenschaft steifer gemacht werden kann. Weiterhin fördert eine Erhöhung der Dichte der Luft, die durch Komprimierung entsteht, auch die Dämpfung und minimiert Geräusche zum Fahrzeuginnenraum hin.

Gemäß einer Weiterbildung ist der Strang als Schlauch ausgebildet, und die Querschnittsfläche und/oder die Materialhärte seiner Wand ist wenigstens um den Faktor zwei kleiner als der Materialquerschnitt eines konventionellen Stranges ohne änderbare elastische Eigenschaften für den gleichen Einsatzzweck an gleicher Stelle.

Diese Ausgestaltung hat damit ein deutlich weicheres elastisches Verhalten als eine Fahrzeugdichtung in Form eines konventionellen Stranges. Durch die geringere Querschnittsfläche ergibt sich zudem eine Materialeinsparung und damit ein geringeres Gewicht. Auch eine geringere Materialhärte führt meist zu einem geringeren Gewicht. Somit liefert die erfindungsgemäße Lösung noch einen zusätzlichen Beitrag zur Energieeinsparung durch Gewichtsreduzierung.

Ein weiterer Vorteil besteht darin, dass die elastischen Eigenschaften des Stranges nicht mehr ausschließlich durch Materialeigenschaften begründet werden müssen und dadurch die mögliche Materialauswahl weniger einschränken. Auch die Prozessfähigkeit des Materials, insbesondere die Vernetzbarkeit, ist bei der Erfindung weiniger entscheidend. Bisherige Dichtungen führten je nach Material oder Prozessfähigkeit des Materials zu einer bleibenden Setzung oder einem Druckverformungsrest. Wird nämlich eine Dichtung komprimiert, so bleibt eine Restverformung erhalten, die in Extremfällen zu Undichtigkeiten und somit zum Ausfall des Dichtungssystems führen kann.

Die elastischen Eigenschaften werden vielmehr im wesentlichen durch die als Druckmittel dienende Luft bestimmt oder entscheidend mitbestimmt. Es ergibt sich somit ein weites Spektrum an einsetzbaren Materialien, die auch nach Gesichtspunkten wie geringe Benetzbarkeit mit Wasser oder geringe Adhäsivität ausgewählt werden kann. Es lässt sich dadurch zum Beispiel das bisher häufig auftretende Verkleben der Fahrzeugdichtungen mit den Anbauteilen oder das Einfrieren vermeiden.

Gemäß einer Weiterbildung kann der Strang aus Moosgummi, Schaumgummi, Elastomer, Thermoplast, wie TP, TPE, TPV oder einer Kombination davon bestehen. Diese große Materialauswahl ermöglicht es, eine Optimierung hinsichtlich Kosten, geringer Wasserbenetzbarkeit und Adhäsivität sowie Gewicht und Lebensdauer vorzunehmen. Der Einsatz von nicht optimal elastischen Werkstoffen ist möglich. Auch die Wiederverwertbarkeit nach Verschrottung des Fahrzeugs kann günstig beeinflußt werden.

Bei einer vorteilhaften Ausgestaltung umfasst der Strang eine Entlüftungsöffnung für die Luftkammer.

Diese Maßnahme dient dazu, eine Durchströmung der Luftkammer zu erreichen und dadurch die Anreicherung mit Schmutzablagerungen oder Kondenswasser im Inneren zu vermeiden.

Dabei kann die Entlüftungsöffnung als durchgehender oder unterbrochener Schlitz längs der Luftkammer ausgeführt sein.

Auf diese Weise wird nicht nur die Luftkammer durchgehend gespült, auch im abzudichtenden Spalt wird durch die permanente Luftströmung Kondenswasser oder anderweitig eingedrungene Feuchtigkeit beseitigt.

Der Strang mit der Luftkammer kann mit einem ergänzenden konventionellen Strang ohne änderbare elastische Eigenschaften verbunden sein oder dessen integraler Bestandteil sein.

Durch diese Kombination lassen sich die Eigenschaften der Erfindung mit den Eigenschaften einer konventionellen Fahrzeugdichtung kombinieren, zum Beispiel, um einen großen Spalt zu überbrücken. Hier werden an die Dichtung auch besondere mechanische Anforderungen gestellt, zum Beispiel eine hohe Biegesteifigkeit.

Weiterhin kann der Strang mit der Luftkammer mit einem Befestigungsstrang verbunden sein, der seinerseits in der Karosserie oder dem Anbauteil befestigt ist.

Diese Aufteilung ermöglicht es, die Funktion der Befestigung und der erfindungsgemäßen Fahrzeugdichtung mit variabler Elastizität zu trennen, um die Fahrzeugdichtung damit in ihrer Funktion zu optimieren.

Die externe Druckluftquelle kann ein motorisch angetriebener Kompressor und/oder eine Staudruckeinrichtung sein.

Im Interesse eines möglichst niedrigen Energieverbrauchs und eines geringen Aufwands an Aggregaten wäre eine Staudruckeinrichtung zu bevorzugen, da sie automatisch im Fahrbetrieb wirksam wird und nur einen geringen Bau- und Gewichtsaufwand erfordert, der durch die Reduzierung des Gewichts der Fahrzeugdichtungen wieder kompensiert wird. Die Staudruckeinrichtung funktioniert geschwindigkeitsabhängig. Es wird praktisch automatisch dann mehr Druck erzeugt, wenn höhere Presskräfte im Dichtungssystem benötigt werden. In diesem Fall könnte auf eine Druckregelung verzichtet werden.

Ein Kompressor kann dann sinnvoll sein, wenn die gewünschte Versteifung der Fahrzeugdichtungen auch bei niedrigen Fahrgeschwindigkeiten eintreten soll, z. B. bei Fahrten über Kopfsteinpflaster in geschlossenen Ortschaften, eventuell noch mit zusätzlicher Geschwindigkeitsbegrenzung auf 30 km/h.

Besonders vorteilhaft ist die Kombination von beiden Druckluftquellen, so dass Energie für den Antrieb des Kompressors gespart werden kann, wenn der Staudruck ausreicht, den entsprechenden Druck in den Luftkammern der Stränge zur Verfügung zu stellen.

Gemäß einer Weiterbildung kann der Luftdruck abhängig von der Fahrgeschwindigkeit und/oder von auf die Karosserie einwirkende Beschleunigungen steuerbar sein.

Dadurch kann der Luftdruck stets so angepasst werden, dass die aufgrund der Fahrgeschwindigkeit durch aerodynamische Kräfte hervorgerufenen Vibrationen als auch die durch Fahrbahnunebenheiten hervorgerufenen Vibrationen bestmöglich gedämpft werden. Dabei wird im Sinne eines sparsamen Energiehaushalts die Druckluftquelle nur jeweils so stark beansprucht, wie es zur Dämpfung der Vibration nötig ist.

Nachfolgend wird die Erfindung anhand eines Ausführungsbeispiels erläutert, das in der Zeichnung dargestellt ist.

In der Zeichnung zeigen:
- Fig. 1: eine schematische Darstellung einer Fahrzeugdichtung in einem Türrahmen,
- Fig. 2: einen Längsschnitt durch eine Fahrzeugdichtung und
- Fig. 3: einen Querschnitt durch eine Fahrzeugdichtung mit Befestigungsstrang

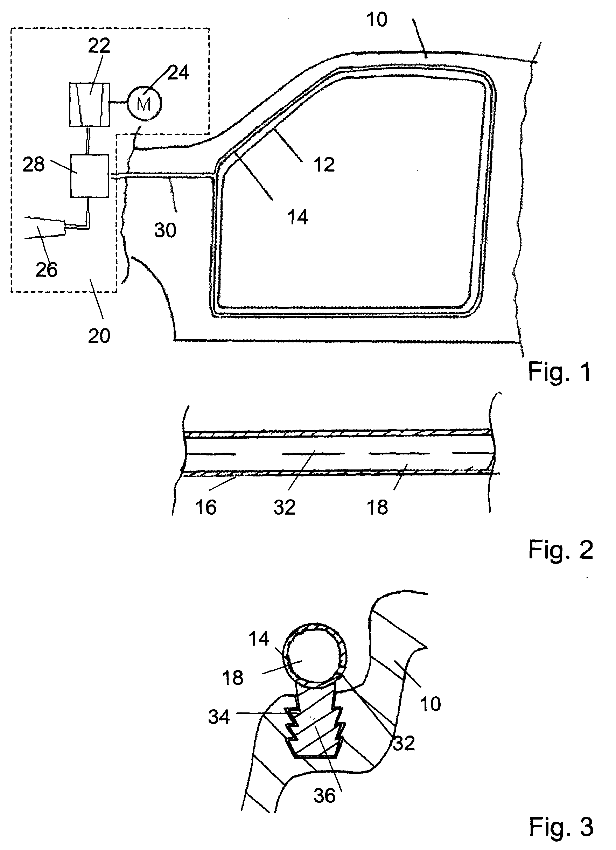

Fig. 1 zeigt eine schematische Darstellung einer Fahrzeugdichtung in einem Türrahmen 12 einer Karosserie 10. Die Fahrzeugdichtung übernimmt hier vollständig die Funktion der bis üblichen Dichtung aus elastomerem Material. Die Fahrzeugdichtung ist ein Strang 14, der in einer Dichtungsnut untergebracht ist. Wie die Figuren 2 und 3 zeigen, auf die unten noch näher eingegangen wird, ist der Strang 14 als Schlauch 16 ausgebildet, der eine Luftkammer 18 umschließt. Die Luftkammer 18 wiederum steht mit einer Druckquelle 20 in Verbindung. Diese umfasst einen Kompressor 22 mit einem Antriebsmotor 24 sowie eine Staudruckeinrichtung 26. Der Kompressor 22 und die Staudruckeinrichtung 26 können wahlweise je nach erforderlichem Druck mittels einer Steuereinrichtung 28 auf eine Speiseleitung 30 geschaltet werden und über die Speiseleitung 30 mit der Luftkammer 18 verbunden werden. Je nach Fahrgeschwindigkeit kann der von der Staudruckeinrichtung 26 gelieferte Druck ausreichend sein oder es wird der vom Kompressor 22 erzeugte Druck benötigt. Die Steuereinrichtung 28 kann auch den erforderlichen Druck in Abhängigkeit der Fahrgeschwindigkeit und/oder der Beschleunigung regeln. Unter Beschleunigung wird hier eine wechselnde Kraft verstanden, die aus dem Überfahren einer unebenen Fahrbahn resultiert.

Fig. 2 zeigt einen Längsschnitt durch den als Schlauch 16 ausgebildeten Strang 14 mit der Luftkammer 18. In dem Schlauch 16 sind Entlüftungsschlitze 32 untergebracht, die sich längs der Wand des Schlauches 16 erstrecken und unterbrochen sind. Durch die Entlüftungsschlitze 32 wird gleichzeitig eine Spülung der Luftkammer 18 des Schlauches 16 bewirkt, als auch eine Trocknung des Spaltes, in dem die Fahrzeugdichtung angeordnet ist. Kondenswasser oder anderweitig eingedrungene Feuchtigkeit wird durch die permanente Spülung mit Luft beseitigt.

Fig. 3 zeigt einen Querschnitt durch eine Fahrzeugdichtung, wie sie beispielsweise im Türrahmen 12 nach Fig. 1 angeordnet sein kann. Hier befindet sich innerhalb der Karosserie 10 eine Nut 34. In diese Nut 34 ist die Fahrzeugdichtung bestehend aus dem Strang 14 und einem integralen Montagestrang 36 eingelassen. Ferner ist der Entlüftungsschlitz 32 erkennbar.

Die Schnittdarstellungen nach Fig. 2 und Fig. 3 veranschaulichen, dass der Strang 14 gegenüber einer konventionellen Dichtung, die den vollen Querschnitt ausfüllen würde, nur noch eine geringe Wandstärke aufweist, während der übrige Innenraum hohl ist. Der Strang 14 ist daher leichter verformbar als eine konventionelle Dichtung.

Allerdings lässt sich seine Verformbarkeit durch Druckbeaufschlagung ändern. Bei entsprechender Druckbeaufschlagung bietet die Wandung des Schlauches 16 den auf die Dichtung einwirkenden Kräften einen Widerstand, der einer Kompression der Dichtung entgegen wirkt. Somit kann in Anhängigkeit des Innendrucks die Eigenschaft der Dichtung stark verändert werden. Bei Fahrzeugstillstand kann Atmosphärendruck herrschen, so dass sich die Dichtung leicht verformen lässt und sich dementsprechend Anbauteile, wie zum Beispiel Türen oder Klappen, ohne wesentlichen Widerstand der Dichtung schließen lassen. Im Fahrbetrieb wird hingegen die Luftkammer 18 druckbeaufschlagt, so dass sich entsprechende Kräfte aufbauen, die einem Zusammendrücken der Dichtung Widerstand entgegensetzen. Diese verhindern dann ein Vibrieren der Anbauteile infolge aerodynamischer Kräfte oder Beschleunigungskräften beim Überfahren unebener Fahrbahnen.

## Patentansprüche

1. Fahrzeugdichtung welche in einem Spalt zwischen der Karosserie (10) und einem Anbauteil oder zwischen Anbauteilen untereinander angeordnet ist und aus einem Strang (14) mit elastischen Eigenschaften besteht, **dadurch gekennzeichnet, dass** der Strang (14) wenigstens eine Luftkammer (18) umfasst, die an eine externe Druckquelle (20) anschließbar ist und dass die elastischen Eigenschaften des Stranges (14) durch Ändern des Druckes änderbar sind.

2. Fahrzeugdichtung nach Anspruch 1, **dadurch gekennzeichnet, dass** der Strang (14) als Schlauch (16) ausgebildet ist und die Querschnittsfläche und/oder die Materialhärte seiner Wand wenigstens um den Faktor zwei kleiner als der Materialquerschnitt eines konventionellen Stranges ohne änderbare elastische Eigenschaften für den gleichen Einsatz an gleicher Stelle.

3. Fahrzeugdichtung nach Anspruch 1 oder 2, **dadurch gekennzeichnet, dass** der Strang (14) aus Moosgummi, Schaumgummi, Elastomer, Thermoplast, wie TP, TPE, TPV oder einer Kombination davon besteht.

4. Fahrzeugdichtung nach einem der Ansprüche 1 bis 3, **dadurch gekennzeichnet, dass** der Strang (14) eine Entlüftungsöffnung (32) für die Luftkammer (18) umfasst.

5. Fahrzeugdichtung nach Anspruch 4, **dadurch gekennzeichnet, dass** die Entlüftungsöffnung (32) als durchgehender oder unterbrochener Schlitz längs der Luftkammer ausgeführt ist.

6. Fahrzeugdichtung nach einem der Ansprüche 1 bis 5, **dadurch gekennzeichnet, dass** der Strang (14) mit der Luftkammer !8) mit einem ergänzenden konventionellen Strang ohne änderbare elastische Eigenschaften verbunden ist oder dessen integraler Bestandteil ist.

7. Fahrzeugdichtung nach einem der Ansprüche 1 bis 6, **dadurch gekennzeichnet, dass** der Strang (14) mit der Luftkammer (189 mit einem Befestigungsstrang (36) verbunden ist, der seinerseits in der Karosserie (10) oder dem Anbauteil befestigbar ist.

8. Fahrzeugdichtung nach einem der Ansprüche 1 bis 7, **dadurch gekennzeichnet, dass** die externe Druckluftquelle (20) eine motorisch angetriebenen Kompressor (22) und/oder eine Staudruckeinrichtung (26) ist.

9. Fahrzeugdichtung nach einem der Ansprüche 1 bis 7, **dadurch gekennzeichnet, dass** der Luftdruck abhängig von der Fahrgeschwindigkeit und/oder von auf die Karosserie (10) einwirkenden Beschleunigungen steuerbar ist.
